# EUROPÄISCHE PATENTSCHRIFT

(11) **EP 1 511 579 B1**
(45) Veröffentlichungstag und Bekanntmachung des Hinweises auf die Patenterteilung: **22.07.2009**
(21) Anmeldenummer: 03759900.8
(22) Anmeldetag: 27.05.2003
(51) Int. Cl.: B05D 3/06, B29C 49/00, B05D 3/14, B65D 1/02

(54) **VERFAHREN UND VORRICHTUNG ZUM HERSTELLEN VON HOHLKÖRPERN**
METHOD AND DEVICE FOR PRODUCING HOLLOW BODIES
PROCEDE ET DISPOSITIF POUR FABRIQUER DES CORPS CREUX

(30) Priorität: 12.06.2002 DE 10226017
(43) Veröffentlichungstag der Anmeldung: 09.03.2005
(73) Patentinhaber: KRONES AG, 93068 Neutraubling (DE)
(72) Erfinder: KRONSEDER, Volker, 93073 Neutraubling (DE); HUMELE, Heinz, 93107 Thalmassing (DE)
(86) Internationale Anmeldenummer: PCT/EP2003/005548
(87) Internationale Veröffentlichungsnummer: WO 2003/106140

(56) Entgegenhaltungen:
- WO-A-95/10117
- DE-A- 2 905 480
- US-A- 4 393 106

## Beschreibung

Die Erfindung bezieht sich auf ein Verfahren und eine Vorrichtung zum Herstellen von Hohlkörpern der in den Oberbegriffen der Ansprüche 1 und 7 beschriebenen Art.

Verfahren und Vorrichtungen zum Herstellen von Hohlkörpern, insbesondere von Einweg- und Mehrweg-Behältern aus einem Polyäthylentherephthalat (PET) sind in großer Zahl bekannt. Insbesondere Getränkeflaschen aus PET setzen sich zunehmend auf dem Markt durch, da sie sehr leicht, für Lebensmittel geeignet, kostengünstig herstellbar und mechanisch ausreichend stabil sind. Ein Nachteil von PET ist jedoch seine Durchlässigkeit für Gase, wie beispielsweise Sauerstoff oder Kohlendioxyd. Tritt Sauerstoff von außen nach innen bzw. Kohlendioxyd aus kohlendioxydhaltigen Getränken von innen nach außen durch die PET-Wand hindurch, so kann dies in beiden Fällen zu einer stark verringerten Haltbarkeitsdauer führen. Man versucht deshalb, die Gasdurchlässigkeit durch geeignete Beschichtungen herabzusetzen. Ein Verfahren zum Herstellen von Hohlkörpern der gattungsgemäßen Art ist beispielsweise in der DE-OS 29 05 480 beschrieben. Beim bekannten Verfahren werden Vorformlinge aus dem Behälterwerkstoff zunächst mit Polyvinylalkohol beschichtet. Da Polyvinylalkohol zwar eine sehr gute Gasbarriere schafft und mit Lebensmitteln verträglich ist, jedoch wasserlöslich ist, wird die Polyvinylalkohol-Beschichtung nach dem Trocknen mit einem weiteren Überzug versehen, der gegen Feuchtigkeit weniger empfindlich ist. Nach dem Austrocknen auch dieser Beschichtung wird dann der Vorformling auf bekannte Weise zum fertigen Behälter, meist durch Blasformen, geformt, wobei auch die Beschichtungen mit ausgeformt werden, so dass diese den fertigen Behälter überziehen. Ein Problem dabei ist jedoch die Haftung der Polyvinylalkohol-Beschichtung auf dem Hohlkörper. Beim bekannten Verfahren wird eine Oberflächenbehandlung zur Erhöhung der Oberflächenenergie unmittelbar vor dem ersten Beschichtungsvorgang eingesetzt, wobei die Oberflächenenergie von ca. 38 mN/m an der unbehandelten Oberfläche auf max 52 mN/m erhöht wird. Dies kann beispielsweise eine Korona-Behandlung oder ein Flammen sein, oder dem Polyvinylalkohol wird ein oberflächenaktives Mittel oder dgl. zugesetzt. Trotzdem musste festgestellt werden, dass die Barriereeigenschaften der Beschichtung nicht in dem eigentlich zu erwartenden Ausmaß verbessert werden können.

Dieses Problem wird in der DE 27 17 307 D2 angesprochen. Dort wird festgestellt, dass sich in einem Überzug Blasen bilden, von denen man glaubte, dass sie durch Kohlendioxyd verursacht würden, das durch die PET-Wand diffundiert. Bei dem in dieser Druckschrift beschriebenen Verfahren versucht man diesen Effekt zu verhindern, indem man die Beschichtung auf der Innenseite des Hohlkörpers aufbringt. Die Beschichtung der Innenseite eines Hohlkörpers ist jedoch komplizierter als die Beschichtung der Außenseite und nur mit einer begrenzten Anzahl Beschichtungsmitteln und für nicht alle Einsatzzwecke geeignet.

Die US 4393106 beschreibt ein Verfahren zum Beschichten von Hohlkörpern und einen dementsprechenden Hohlkörper, bei dem in einem ersten Beschichtungsschritt eine Barriereschicht auf den Behälter aufgebracht wird, in einem zweiten Schritt diese Barriereschicht getrocknet wird. In einem weitern dritten Schritt wird die erste Schicht mit einer Deckschicht bzw. Decklack beschichtet, wobei diese Schicht abermals getrocknet werden muss. Gegenstand dieses Dokuments ist auch die besondere Zusammensetzung der Beschichtung und der Deckschicht.

Der Erfindung liegt somit die Aufgabe zugrunde, ein Verfahren und eine Vorrichtung zum Herstellen von Hohlkörpern mit einer verbesserten Gasbarrierebeschichtung zu schaffen.

Diese Aufgabe wird durch das Verfahren nach Anspruch 1 und die Vorrichtung nach Anspruch 7 gelöst.

Die vorliegende Erfindung basiert auf der Erkenntnis, dass es mit der beanspruchten, sorgfältigen, mehrstufigen Vorbehandlung möglich ist, eine Blasenbildung und die damit verbundene verringerte Barrierewirkung wirksam zu unterdrücken. Durch die elektrostatische Entladung der Oberfläche nach der Behandlung zum Erhöhen der Oberflächenenergie kann die Haftung der Beschichtung vergleichmäßigt werden, so dass keine Blasenbildung mehr auftritt.

Zweckmäßigerweise geschieht diese Entladung durch eine Luftdusche mit ionisierter Luft, wobei durch das mechanische Anblasen auch eventuell anhaftende und durch die elektrostatische Aufladung angezogene Mikropartikel mit abgeblasen werden.

Sind Fettablagerungen zu erwarten, z.B. aus dem Formtrennmittel bei spritzgegossenen Vorformlingen, so ist eine Fettentfernung vor der Behandlung zur Erhöhung der Oberflächenenergie zweckmäßig und meist auch erforderlich.

Eine weitere Möglichkeit, die Barriereeigenschaften der Beschichtung zu verbessern, liegt im Eintrag einer wesentlich höheren Oberflächenenergie als dies bislang im Stand der Technik eingesetzt wurde. Erfindungsgemäß wird die Oberflächenenergie über 60 mN/m und bevorzugt über 70 mN/m erhöht. Zum Erhöhen der Oberflächenenergie auf diese Werte eignet sich vor allen Dingen das bekannte Beflammen.

Eine weitere Möglichkeit die Barriereeigenschaften einer Beschichtung zu verbessern liegt erfindungsgemäß in einer sanften Trocknung bei niedrigen Temperaturen unter 60°C, bevorzugt bei 45°C, jedoch mit stark entfeuchteter Luft, die bevorzugt einen Wassergehalt von weniger als 3 g/m³ aufweist. Durch diese Art Trocknung wird eine gleichmäßige Durchtrocknung über die gesamte Schichtdicke erreicht, so dass ein verbleibender Restfeuchtegehalt gleichmäßig in der gesamten Beschichtung verteilt ist und eine Hautbildung unterdrückt wird. Dagegen erzeugen Trockner unter Verwendung von Mikrowellen oder Infrarotstrahlen zwar eine schnelle Trocknung, bergen jedoch die Gefahr, dass unter einer sehr trockenen Oberflächenhaut mit runzeligem Aussehen ein höherer Restfeuchtegehalt verbleibt als dies wünschenswert ist, wobei die runzelige Oberfläche auch nach dem Blasprozess erhalten bleibt.

Eine weitere Möglichkeit, die Gasbarriereeigenschaften zu verbessern, ist das Aufbringen der Gasbarriere-Beschichtung durch Aufschwallen, wobei sichergestellt wird, dass der zu beschichtenden Oberfläche ein Überschuss an Beschichtungsmittel auf eine Weise zugeführt wird, die das Beschichtungsmittel nicht gleich wieder abspült. Wird anschließend eine Filmbildungsstrecke durchlaufen, so kann der Überschuss langsam abtropfen, so dass vor der stärkeren Einwirkung des Trockners sich bereits ein vollständig deckener Beschichtungsfilm ausgebildet hat.

Ausführungsbeispiele der Erfindung werden nachfolgend anhand der Zeichnungen näher erläutert. Es zeigen:
- Fig. 1: eine schematische Draufsicht auf eine erfindungsgemäße Vorrichtung zur Durchführung des erfindungsgemäßen Verfahrens, und
- Fig. 2: eine schematische Darstellung eines Hohlkörpers während der Beschichtung.

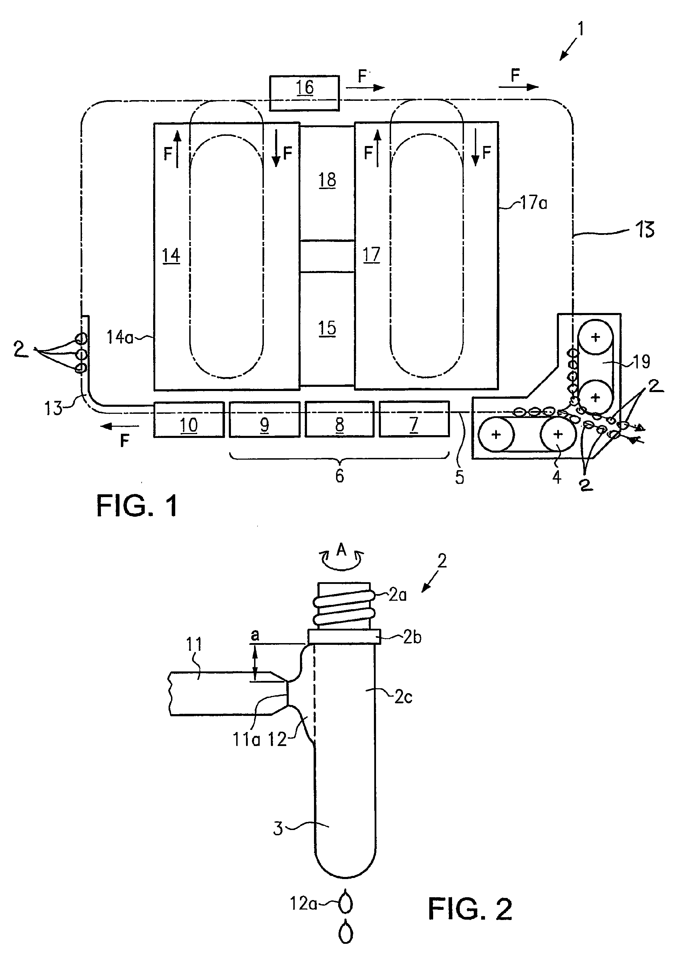

Fig. 1 zeigt in stark schematisierter Draufsicht einen Teil einer im Wesentlichen automatisch und kontinuierlich arbeitenden Vorrichtung 1 zum Herstellen von Hohlkörpern 2 (Fig. 2) mit einer Gasbarrierebeschichtung 3. Die Hohlkörper 2 können die üblichen Vorformlinge (Preform) sein, wie sie bei der Herstellung von Getränkeflaschen oder ähnlichen Behältern eingesetzt werden. Mit der erfindungsgemäßen Vorrichtung 1 ist es jedoch auch möglich, bereits fertige Hohlkörper zu beschichten.

Die als Vorformlinge ausgebildeten Hohlkörper 2 bestehen aus einem für die Herstellung von Getränkeflaschen üblichem Polyäthylentherephthalat (PET). Derartige Vorformlinge weisen einen bereits fertiggestellten Gewindekopf 2a auf, der durch einen überstehenden Flansch oder Kragen 2b vom eigentlichen, zu beschichtenden Körper 2c mit geschlossenem Ende getrennt ist. Der überstehende Flansch 2b dient einerseits als Griffelement für bekannte Transport- oder Greifeinrichtungen, mit denen die Hohlkörper 2 einzeln hängend und gegebenenfalls unter Drehung in Richtung des Pfeiles A um ihre Längsachse durch die Vorrichtung 1 transportiert werden können, und schützt andererseits das bereits fertige Gewinde während der Bearbeitung.

Die Hohlkörper 2 werden, beispielsweise mit Hilfe eines Förderers 4 einzeln nacheinander an die Vorrichtung 1 übergeben, die ggfs. gekapselt sein kann, so dass ein Betrieb unter Reinraumbedingungen möglich ist. Es ist jedoch auch möglich, die Vorrichtung 1 unmittelbar an eine Herstellungsstrecke für die Hohlkörper 2 anzuschließen.

Vom Förderer 4 werden die Hohlkörper 2 auf einen sich durch die gesamte Vorrichtung 1 erstreckenden Linearförderer 5 z.B. in Form einer mit in den Vorformling einfahrbaren Dornen bestückten endlosen Förderkette, übergeben. Dieser Förderer 5 fördert die Hohlkörper 2 zunächst durch eine mehrstufige Vorbehandlungsstrecke 6. Die Vorbehandlungsstrecke 6 enthält in Förderrichtung F nach dem Förderer 4 eine Einrichtung 7 zum Entfetten. Die Einrichtung 7 enthält bevorzugt Waschdüsen, die auf den zu beschichtenden Teil 2c des Hohlkörpers 2 gerichtet sind. Der Förderer 5 ist bevorzugt in diesem Bereich so ausgebildet, dass die Hohlkörper 2 rotieren. Als Entfettungsmittel wird bevorzugt Äthylalkohol (Ethanol) eingesetzt und über die Düsen auf den Hohlkörper gespritzt, so dass dieser vollständig benetzt wird.

In Förderrichtung F nachfolgend enthält die Vorbehandlungsstrecke 6 eine Einrichtung 8 zum Erhöhen der Oberflächenenergie. Bevorzugt ist die Einrichtung 8 eine Beflammungseinrichtung, wie sie im Stand der Technik bereits zu diesem Zweck eingesetzt wurde. Die Beflammungseinrichtung 8 ist jedoch so eingestellt, dass die Oberflächenenergie auf Werte über 60 mN/m und bevorzugt über 70 mN/m erhöht werden kann. Auch im Bereich der Einrichtung 8 ist die Fördereinrichtung 5 so ausgebildet, dass der Hohlkörper 2 um seine senkrechte Achse rotiert.

Die Vorbehandlungsstrecke 6 enthält in Förderrichtung F nach der Beflammungseinrichtung 8 eine Einrichtung 9 zum Erniedrigen der elektrostatischen Aufladung bzw. zum Entladen der zu beschichtenden Oberfläche des Hohlkörpers 2. Die Einrichtung 9 enthält wiederum auf den zu beschichtenden Bereich 2c des Hohlkörpers 2 gerichtete Düsen, durch die Strahlen ionisierter Luft gegen den Hohlkörper 2 geblasen werden. Durch die ionisierte Luft wird eine Entladung der Oberfläche bewirkt, gleichzeitig werden durch die Luftstrahlen eventuell anhaftende Partikel abgeblasen. Auch im Bereich der Einrichtung 9 ist die Fördereinrichtung 5 so ausgebildet, dass sie die Hohlkörper 2 um ihre senkrechte Achse dreht.

Nach Durchlaufen der Vorbehandlungsstrecke 6 erfolgt nunmehr das eigentliche Beschichten, bevorzugt auf den vom Beflammen noch warmen Hohlkörper an dessen Aussenseite. Dabei durchläuft der Hohlkörper 2 zunächst eine erste Beschichtungseinrichtung 10, in der eine Gasbarriereschicht 3, bevorzugt auf der Basis von Polyvinylalkohol, aufgebracht wird. Beschichtungsmittel für derartige Gasbarriereschichten sind dem Fachmann bekannt und müssen hier nicht näher erläutert werden. Bevorzugt wird ein in voll entsalztem Wasser gelöster Polyvinylalkohol mit einem hohen Hydrolysegrad von mehr als 99,9 Mol-% eingesetzt. Das Beschichtungsmittel enthält bevorzugt keine weiteren Zusätze, insbesondere kein Benetzungsmittel. Das Beschichtungsmittel hat eine Konzentration von 5 bis 12 % und wird bei Raumtemperatur verarbeitet.

Das Beschichtungsmittel wird bevorzugt durch ein in Fig. 2 angedeutetes Beschwallen aufgebracht, wobei eine Düse 11 eine wässrige Lösung von Polyvinylalkohol 12 im Schwall gegen die zu beschichtende Oberfläche 2c leitet, wobei sich Düse M und Hohlkörper 2 relativ zueinander bewegen; wobei bevorzugt der Hohlkörper 2 rotiert. Die Menge des Beschichtungsmittels 12 übersteigt die Menge, die für eine vollständige Überdeckung der zu beschichtenden Oberfläche 2c ausreichen würde, so dass der Überschuss in Tropfen 12a abtropft. Der obere Rand der Düsenöffnung 11a der Düse 11 befindet sich mit einem Abstand a unterhalb des Kragens 2b, wobei der Abstand a so bemessen ist, dass das Beschichtungsmittel 12 bis unterhalb des Kragens 2b schwallt, jedoch den Kragen 2b nicht überwindet, so dass auf diese Weise das Gewinde 2a wirksam gegen eine unerwünschte Beschichtung geschützt ist. Der Abstand a beträgt bei den üblicherweise zum Herstellen von PE-Flaschen verwendeten Hohlkörpern 2 ca. 20 bis 25 mm, hängt jedoch ab von der speziellen Viskosität des Beschichtungsmittels 12 und der eingesetzten Menge.

Die Viskosität und die Menge des Beschichtungsmittels 12 wird so gewählt, dass auf der zu beschichtenden Oberfläche 2c eine einzige Schicht mit ausreichender Schichtdicke des Beschichtungsmittels 12 haften bleibt, die auch nach dem Verblasen der Hohlkörper 2 zu fertigen Behältern noch eine vollständige Überdeckung mit ca. 2 µm Dicke garantiert.

Nach der ersten Beschichtungseinrichtung 10 schließt sich eine Abtropf- und Filmbildungsstrecke 13 an, in der sich die endgültige Schichtdicke einstellt.

Dann führt der Förderer 5 die Hohlkörper 2 in einen ersten Trockner 14. Der erste Trockner 14 weist ein geschlossenes Gehäuse 14a auf, in dessen Innerem sich der Förderer 5 unter Einbeziehung gerader Bereiche wendelförmig nach oben, d.h. senkrecht zur Zeichnungsebene 1 schraubt, bis er das Gehäuse 14a des Trockners 14 im oberen Bereich wieder verlässt.

Die Trocknung des Beschichtungsmittels 12 im Trockner 14 erfolgt in Luft und sanft unter niedrigen Temperaturen von unter 60°C bevorzugt 45°C. Dem Trockner 14 ist eine Einrichtung 15 zugeordnet, die die zum Trocknen verwendete Luft entfeuchtet, und zwar bevorzugt auf einen Wert von unter 2 bis 3 g Wasser pro Kubikmeter Luft. Auf diese Weise ist eine optimale Durchtrocknung des Beschichtungsmittels 12 auf dem Hohlkörper 2 in relativ kurzer Zeit von z.B. ca. 3 min gewährleistet.

Der Hohlkörper 2 mit der fertig getrockneten Gasbarriereschicht 3 verlässt den Trockner 14 im oberen Bereich und gelangt zu einer zweiten Beschichtungseinrichtung 16, in der die Polyvinylalkohol-Gasbarriereschicht 3 durch eine weitere Schicht abgedeckt wird, die die mechanische Festigkeit und die Beständigkeit gegen Wasser erhöht. In der zweiten Beschichtungseinrichtung 16 erfolgt z.B. eine Beschichtung auf der Basis eines Polyvinylbutyrals oder eines anderen alkohollöslichen Beschichtungsmittels. Die Beschichtung kann ebenfalls durch Beschwallen erfolgen, wobei darauf zu achten ist, dass die Beschichtung überlappend erfolgt, so dass die Gasbarriereschicht 3 auch an ihrem Übergang zum unbeschichteten Kragen 2b abgedeckt ist. Polyvinylbutyral erfordert ein nicht-wässriges Lösungsmittel, wobei bevorzugt Äthylalkohol (Ethanol) eingesetzt wird.

Nach dem Verlassen der zweiten Beschichtungseinrichtung 16, wobei sich auch hier eine nicht gezeichnete Abtropfstrecke anschließen kann, werden die nunmehr mit der Gasbarriereschicht 3 und einer Deckschicht versehenen Hohlkörper 2 in einen zweiten Trockner 17 geleitet, der im Wesentlichen identisch wie der erste Trockner 14 ausgebildet ist. Auch der Trockner 17 hat ein geschlossenes Gehäuse 17a, in dessen Innerem sich der Förderer 5, diesmal von oben nach unten schraubt. Auch die Trocknung der zweiten Beschichtung im Trockner 17 erfolgt sanft mit etwa 45°C warmer Luft mit ca. 3 g Wasser pro Kubikmeter, wobei auf eine Luftentfeuchtungseinrichtung verzichtet werden kann. Statt dessen ist eine Rückgewinnungseinrichtung 18 für das verdampfte Lösungsmittel der zweiten Beschichtung vorgesehen. Nach dem Trocknen der zweiten Beschichtung werden die fertig beschichteten Hohlkörper 2 durch den Förderer 5 an einen Abförderer 19 oder direkt an eine Weiterverarbeitungsmaschine, z.B. eine Streckblasmaschine übergeben.

In Abwandlung des beschriebenen und gezeichneten Ausführungsbeispiels kann beispielsweise das Entfetten durch andere Entfettungsmittel und/oder andere bekannte Einrichtungen erfolgen. Statt der Beflammungseinrichtung können für Vorbehandlungszwecke vor einer Beschichtung ebenfalls bekannte Korona-, Plasma- oder HF-Behandlungseinrichtungen oder dgl. eingesetzt werden. Auch die Entladung kann durch andere, bekannte Mittel erfolgen. Die erfindungsgemäß vorgeschlagene Vorbehandlungsstrecke ist auch mit anderen Beschichtungsmitteln verwendbar. Außer durch Aufschwallen können die Beschichtungen auch durch Besprühen, Tauchen oder andere bekannte Beschichtungsverfahren aufgebracht werden. Auch das Trocknen kann durch andere bekannte Trocknungsverfahren, wie beispielsweise Infrarot oder Mikrowelle, erfolgen, insbesondere dann, wenn das Beschichtungsmittel relativ unempfindlich ist. Auch kann die Erfindung beim Beschichten von Innenoberflächen eingesetzt werden und auch dann, wenn nur mit einem Beschichtungsmittel gearbeitet oder nur eine Schicht aufgebracht wird.

## Patentansprüche

1. Verfahren zum Herstellen von mit einer Gasbarrierebeschichtung versehenen Hohlkörpern aus PET, wobei der Hohlkörper zum Erhöhen der Oberflächenenergie der zu beschichtenden Oberflächen vorbehandelt, beschichtet und anschließend getrocknet wird, **gekennzeichnet durch** eine mehrstufige Vorbehandlung, die zumindest eine Erhöhung der Oberflächenenergie und eine elektrostatische Entladung der Oberfläche umfasst, wobei die elektrostatische Entladung der Oberfläche nach der Erhöhung der Oberflächenenergie durchgeführt wird.

2. Verfahren nach Anspruch 1, wobei die
Oberflächenenergie auf einen Wert über 60 mN/m, bevorzugt über 70 mN/m, erhöht wird.

3. Verfahren nach Anspruch 1 oder 2, **dadurch gekennzeichnet, dass** die Oberflächenenergie durch Beflammen erhöht wird.

4. Verfahren nach einem der Ansprüche 1 bis 3, **gekennzeichnet durch** eine weitere Vorbehandlung mit einem Fettlösemittel, insbesondere Äthylalkohol, die vor der Behandlung zum Erhöhen der Oberflächenenergie erfolgt.

5. Verfahren nach einem der Ansprüche 1 bis 6, **dadurch gekennzeichnet, dass** die Beschichtung durch Beschwallen mit dem Beschichtungsmittel erfolgt.

6. Verfahren nach einem der Ansprüche 1 bis 5, **dadurch gekennzeichnet, dass** das Trocknen mit warmer, entfeuchteter Luft von unter 60°C, bevorzugt 45°C, und bevorzugt weniger als 3 g/m³ Wassergehalt erfolgt.

7. Vorrichtung zum Herstellen von Hohlkörpern (2) aus PET mit einer Gasbarrierebeschichtung, mit einer Vorrichtung (8) zum Erhöhen der Oberflächenenergie der zu beschichtenden Oberfläche, einer Beschichtungseinrichtung (10) und einem Trockner (14), **gekennzeichnet durch** eine mehrstufige Vorbehandlungsstrecke (6) mit einer Vorrichtung (9) zum elektrostatischen Entladen der zu beschichtenden Oberfläche (2c), die nach der Vorrichtung (8) zum Erhöhen der Oberflächenenergie angeordnet ist.

8. Vorrichtung nach Anspruch 7, **dadurch gekennzeichnet, dass** die Vorrichtung (9) zur elektrostatischen Entladung eine Luftdusche mit ionisierter Luft ist.

9. Vorrichtung nach Anspruch 7 oder 8, **dadurch gekennzeichnet, dass** die Vorbehandlungsstrecke (6) eine Vorrichtung (7) zum Entfetten der zu beschichtenden Oberfläche (2c) enthält, die vor der Vorrichtung (8) zum Erhöhen der Oberflächenenergie angeordnet ist.

10. Vorrichtung nach einem der Ansprüche 7 bis 9, **gekennzeichnet durch** eine Filmbildungsstrecke (13), die zwischen der Beschichtungseinrichtung (10) und dem Trockner (14) angeordnet ist.

11. Vorrichtung nach einem der Ansprüche 7 bis 10, **dadurch gekennzeichnet, dass** der Trockner (14) ein Warmlufttrockner ist und eine Entfeuchtungseinrichtung (15) für die Trocknerluft enthält.

12. Vorrichtung nach einem der Ansprüche 7 bis 11, **dadurch gekennzeichnet, dass** sich an den Trockner (14) zum Trocknen der Gasbarriereschicht eine zweite Beschichtungseinrichtung (16) zum Aufbringen einer die Gasbarriereschicht abdeckenden, weiteren Schicht und ein weiterer Trockner (17) für die zweite Schicht anschließt.

## Claims

1. Method for producing hollow bodies made from PET and provided with a gas barrier coating, wherein in order to increase the surface energy of the surfaces to be coated, the hollow body is pre-treated, coated and subsequently dried, **characterised by** a multi-stage pre-treatment which comprises at least increasing the surface energy and electrostatic discharging of the surface, wherein the electrostatic discharging of the surface is carried out after increasing the surface energy.

2. Method according to claim 1, wherein the surface energy is increased to a value above 60 mN/m, preferably above 70 mN/m.

3. Method according to claim 1 or 2, **characterised in that** the surface energy is increased by flame treatment.

4. Method according to one of the claims 1 to 3, **characterised by** a further pre-treatment with a fat solvent, in particular ethyl alcohol, which is carried out before the treatment to increase the surface energy.

5. Method according to one of the claims 1 to 6, **characterised in that** the coating is carried out by drenching with the coating medium.

6. Method according to one of the claims 1 to 5, **characterised in that** the drying is carried out with warm, dehumidified air at below 60°C, preferably 45°C, and with a water content of preferably less than 3 g/m³.

7. Device for producing hollow bodies (2) made from PET and provided with a gas barrier coating, comprising a device (8) for increasing the surface energy of the surface to be coated, a coating apparatus (10) and a drier (14), **characterised by** a multi-stage pre-treatment line (6) having a device (9) for electrostatic discharging of the surface (2c) to be coated, which is arranged following the device (8) for increasing the surface energy.

8. Device according to claim 7, **characterised in that** the device (9) for electrostatic discharging is an air curtain with ionised air.

9. Device according to claim 7 or 8, **characterised in that** the pre-treatment line (6) comprises a device (7) for degreasing the surface (2c) to be coated, said device (7) being arranged before the device (8) for increasing the surface energy.

10. Device according to one of the claims 7 to 9, **characterised by** a film formation line (13) which is arranged between the coating apparatus (10) and the drier (14).

11. Device according to one of the claims 7 to 10, **characterised in that** the drier (14) is a warm air drier and comprises a dehumidifying apparatus (15) for the drier air.

12. Device according to one of the claims 7 to 11, **characterised in that** a second coating apparatus (16) for applying a further layer covering the gas barrier layer and a further drier (17) for the second layer follows the drier (14) for drying the gas barrier layer.

## Revendications

1. Procédé de fabrication d'un corps creux en PET muni d'un revêtement formé d'une barrière aux gaz, et
la surface à revêtir est traitée préalablement puis séchée pour augmenter l'énergie de surface,
**caractérisé par**
- un traitement préalable à plusieurs étapes comprenant au moins une augmentation de l'énergie de surface et une décharge électrostatique de la surface,
- la décharge électrostatique sur la surface étant faite après élévation de l'énergie de surface.

2. Procédé selon la revendication 1,
dans lequel
l'énergie de surface est relevée à un niveau supérieur à 60 mN/m et de préférence supérieur à 70 mN/m.

3. Procédé selon la revendication 1 ou 2,
**caractérisé en ce qu'**
on augmente l'énergie de surface par flammage.

4. Procédé selon les revendications 1 à 3,
**caractérisé en ce qu'**
on effectue un autre traitement préalable avec un solvant de graisses, notamment avec de l'alcool éthylique, avant le traitement servant à augmenter l'énergie de surface.

5. Procédé selon les revendications 1 à 4,
**caractérisé en ce que**
le revêtement se fait par un traitement à la vague avec l'agent de revêtement.

6. Procédé selon les revendications 1 à 5,
**caractérisé en ce que**
le séchage se fait avec de l'air chaud humidifié à une température inférieure à 60°C et de préférence de 45°C et de manière encore plus préférentielle, avec moins de 3 g/m³ de teneur en eau.

7. Dispositif pour la fabrication d'un corps creux (2) en PET avec un revêtement barrière aux gaz comportant un dispositif (8) pour augmenter l'énergie de surface de la surface à revêtir, une installation de revêtement (10) et un séchoir (14), ,
**caractérisé par**
une étape de traitement préalable (6) à plusieurs niveaux avec un dispositif (9) pour réaliser la décharge électrostatique à la surface à revêtir (2c) qui est effectuée après le dispositif (8) pour augmenter l'énergie de surface.

8. Dispositif selon la revendication 7,
**caractérisé en ce que**
le dispositif de décharge électrostatique (9) est une douche à air fournissant de l'air ionisé.

9. Dispositif selon la revendication 7 ou 8,
**caractérisé en ce que**
le chemin de traitement préalable (6) comporte un dispositif (7) pour dégraisser la surface (2c) à revêtir, ce dispositif précédant le dispositif (8) pour augmenter l'énergie de surface.

10. Dispositif selon les revendications 7 à 9,
**caractérisé par**
un chemin de formation de film (13) entre l'installation de revêtement (10) et le séchoir (14).

11. Dispositif selon les revendications 7 à 10,
**caractérisé en ce que**
le séchoir (14) est un séchoir à air chaud comportant une installation d'humidification (14) de l'air.

12. Dispositif selon les revendications 7 à 11,
**caractérisé en ce que**
le séchoir (14) séchant la couche formant la barrière aux gaz comporte une seconde installation de revêtement (16) pour appliquer une autre couche couvrant la couche formant la barrière aux gaz et un autre séchoir (17) est prévu ensuite pour cette seconde couche.
